# FASCICULE DE BREVET EUROPEEN

(11) **EP 2 414 661 B1**
(45) Date de publication et mention de la délivrance du brevet: **10.07.2013**
(21) Numéro de dépôt: 10717692.7
(22) Date de dépôt: 31.03.2010
(51) Int. Cl.: F02K 9/97

(54) **DIVERGENT DEPLOYABLE DE PROPULSEUR**
AUSFAHRBARE DIVERGIERENDE DÜSE FÜR EINE ANTRIEBSEINHEIT
DEPLOYABLE DIVERGENT NOZZLE FOR A PROPULSIVE UNIT

(30) Priorité: 02.04.2009 FR 0952138
(43) Date de publication de la demande: 08.02.2012
(73) Titulaire: Snecma, 75015 Paris (FR)
(72) Inventeur: CONDAMINET, Olivier, F-27620 Gasny (FR); STEPHANT, Romain, F-13500 Martigues (FR); JAMES, Philippe, F-27200 Vernon (FR)
(74) Mandataire: Intès, Didier Gérard André
(86) Numéro de dépôt international: PCT/FR2010/050601
(87) Numéro de publication internationale: WO 2010/112766

(56) Documents cités:
- EP-A- 0 516 519
- EP-A- 0 661 436
- FR-A- 2 622 931
- GB-A- 2 013 787

## Description

La présente invention a pour objet un divergent déployable de propulseur fusée.

La poussée d'un propulseur dépend essentiellement du débit de gaz éjecté et de la vitesse d'éjection. Pour optimiser la vitesse d'éjection de gaz, il est nécessaire d'avoir un divergent de fort diamètre de sortie, principalement dans le cas d'un deuxième ou d'un troisième étage d'un propulseur multi-étages. Cela conduit à des divergents longs, souvent peu compatibles avec l'encombrement disponible pendant les phases propulsées des étages inférieurs. Une solution consiste à concevoir un divergent déployable ayant une longueur réduite dans sa configuration initiale et qui peut être allongé par mise en place d'un ou plusieurs anneaux ou parties de divergent.

Des divergents déployables sont également utilisés pour permettre une adaptation de la section de sortie de tuyères de propulseurs, en fonction de la pression ambiante, laquelle diminue entre des faibles altitudes proches du sol et les altitudes élevées, de sorte qu'une poussée optimale soit le plus possible approchée malgré les changements d'altitude.

Il a été proposé différents types de mécanismes de déploiement de divergents déployables, en particulier des mécanismes utilisant des systèmes à câbles, à vis à rouleaux, à vis-à-billes, à poutres déroulables ou à membrane. On connaît ainsi notamment les documents FR 2622931, FR 2457390, FR 2677080 et FR 2757571.

Néanmoins, quel que soit le système ou le mécanisme de déploiement du divergent mobile, lors du décollage de la fusée ou analogue, la partie de divergent mobile en position reployée ou initiale est excitée dynamiquement par le moteur et le ou les propulseurs.

Ainsi, la partie de divergent mobile, solidaire de l'ensemble de la structure par l'intermédiaire d'un certain nombre de points de fixation uniquement, se déplace parfois violemment, en particulier si elle entre en résonance aux fréquences d'excitation du moteur/propulseur(s). Ceci a pour conséquence de très importantes vibrations en provenance de la partie de divergent mobile qui sont susceptibles de se transmettre à l'ensemble de la structure de la fusée ou analogue et engendrer des efforts qui peuvent s'avérer fatals, en particulier pour le mécanisme de déploiement de la partie de divergent mobile et pour certains composants de la fusée ou analogue.

A l'heure actuelle, la stratégie pour résoudre ce type de problèmes consiste à renforcer mécaniquement les composants, en particulier au niveau du mécanisme de déploiement du divergent déployable.

Cette solution a évidemment un impact négatif sur la masse du mécanisme de déploiement et donc sur ses performances fonctionnelles. Ce renforcement mécanique présente également un coût additionnel conséquent. Enfin, cette solution ne permet pas de résoudre de façon certaine ce problème de la transmission des vibrations : en effet, si le mécanisme de déploiement entre en résonance, l'augmentation de masse aggrave le phénomène dynamique.

L'invention vise à proposer une solution pour remédier à ce problème de vibrations, ou en limiter les effets, qui soit sensiblement exempte des inconvénients précités de l'art antérieur.

Pour atteindre ce but selon l'invention, l'invention concerne un divergent déployable de propulseur, comprenant :
- une première partie de divergent fixe apte à être raccordée à un support fixe du propulseur,
- une seconde partie de divergent mobile entre une position rétractée et une position déployée dans laquelle elle se raccorde à l'extrémité aval de la première partie de divergent pour prolonger celle-ci, et
- au moins un mécanisme de déploiement comportant un moyen de déplacement de la seconde partie de divergent mobile par rapport à la première partie de divergent fixe pour le déploiement de la seconde partie de divergent mobile depuis sa position rétractée à sa position déployée,
caractérisé en ce qu'il comprend au moins un moyen d'amortissement destiné à amortir les vibrations en provenance de la seconde partie de divergent et/ou du mécanisme de déploiement, et en ce que le moyen d'amortissement est positionné entre le mécanisme de déploiement et le support fixe du propulseur et/ou la première partie de divergent fixe.

Ainsi, c'est en éliminant ou en amortissant substantiellement les vibrations provenant de la partie de divergent mobile et/ou du mécanisme/système de déploiement de cette partie de divergent mobile que l'invention atteint son but.

Grâce au système amortisseur de l'invention, la transmission des vibrations/contraintes est réduite très sensiblement, au moins de l'ordre d'un facteur deux, de sorte qu'il est dorénavant possible, sans renforcement mécanique, de doter une fusée ou analogue d'une nécessaire partie de divergent mobile destinée à venir se positionner, en position déployée, à la suite d'un divergent fixe sans risquer d'endommager la structure de la fusée ou analogue, en particulier lors du décollage de cette fusée ou analogue.

La position particulière du moyen d'amortissement entre le mécanisme de déplacement d'une part, et d'une partie fixe d'autre part (le support fixe du propulseur et/ou la première partie de divergent fixe) permet d'amortir efficacement les vibrations en évitant qu'elles ne se transmettent à la structure fixe. Une telle efficacité ne serait pas atteinte avec un moyen d'amortissement entre deux parties mobiles.

D'autres particularités ou caractéristiques sont présentées dans la suite.

Le mécanisme de déploiement comprend au moins un ensemble de fixation pour assurer la fixation du mécanisme de déploiement de la seconde partie de divergent mobile.

Avantageusement, l'ensemble de fixation comprend le moyen amortisseur.

Selon un mode de réalisation de l'invention, l'ensemble de fixation comprend une pluralité de bras et une pièce de liaison, lesdits bras étant aptes à être fixés d'une part à une pièce fixe par rapport au divergent fixe et étant fixés d'autre part à la pièce de liaison.

De manière particulièrement avantageuse, au moins un desdits bras est apte à être relié au support fixe du propulseur et l'amortissement des vibrations ou analogue est particulièrement efficace lorsque le moyen d'amortissement est disposé entre la pièce de liaison et ce bras. L'angle entre le bras relié au support fixe du propulseur et la pièce de liaison est un angle aigu. De même, l'angle entre le moyen d'amortissement et le mécanisme de déploiement ainsi que l'angle entre le moyen d'amortissement et le susdit bras sont des angles aigus.

Selon un mode de réalisation de l'invention, le mécanisme de déploiement est un moyen apte à assurer le déplacement en translation de la seconde partie de divergent mobile, tel qu'une vis-à-billes.

Selon un mode de réalisation de l'invention, le divergent déployable selon l'invention comprend trois ensembles de fixation répartis de manière homogène selon la circonférence du divergent fixe.

Avantageusement, le mécanisme de déploiement est commandé par une unité de commande située à distance dudit divergent.

D'autres caractéristiques et avantages de l'invention apparaîtront mieux à la lecture de la description qui suit d'un mode préféré de réalisation de l'invention donné à titre d'exemple non limitatif. La description se réfère aux dessins annexés sur lesquels :
- La figure 1 est une vue en perspective d'un divergent déployable selon l'invention dans laquelle la seconde partie de divergent mobile est en position déployée ;

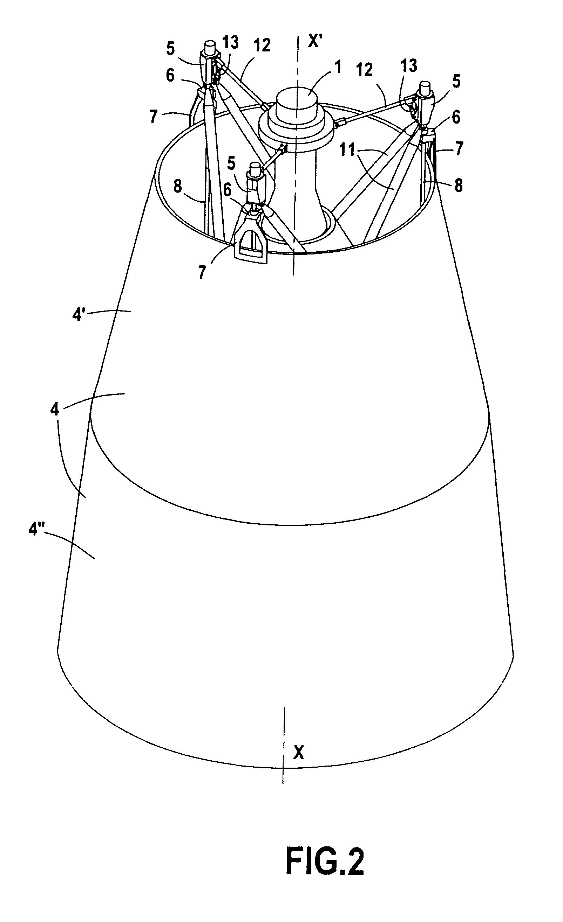

- la figure 2 est une vue en perspective du divergent déployable selon l'invention représenté sur la figure 1, dans laquelle la seconde partie de divergent mobile est en position reployée ;
- la figure 3 est une vue schématique plus détaillée de la zone de support fixe du propulseur raccordé à la première partie de divergent fixe;
- les figures 4A et 4B illustrent schématiquement les positions extrêmes du moyen de déplacement et de l'ensemble de fixation lors de vibrations ainsi que la disposition d'un moyen d'amortissement selon l'invention.

Dans la suite, on a choisi d'illustrer l'invention dans laquelle le mécanisme de déploiement du divergent déployable utilise, comme moyen de déplacement de la seconde partie de divergent mobile, un système de vis-à-billes de manière à réaliser un mouvement de translation de la seconde partie de divergent mobile, mais on aurait également pu envisager des systèmes à câbles, à vis à rouleaux, à poutres déroulables ou à membrane.

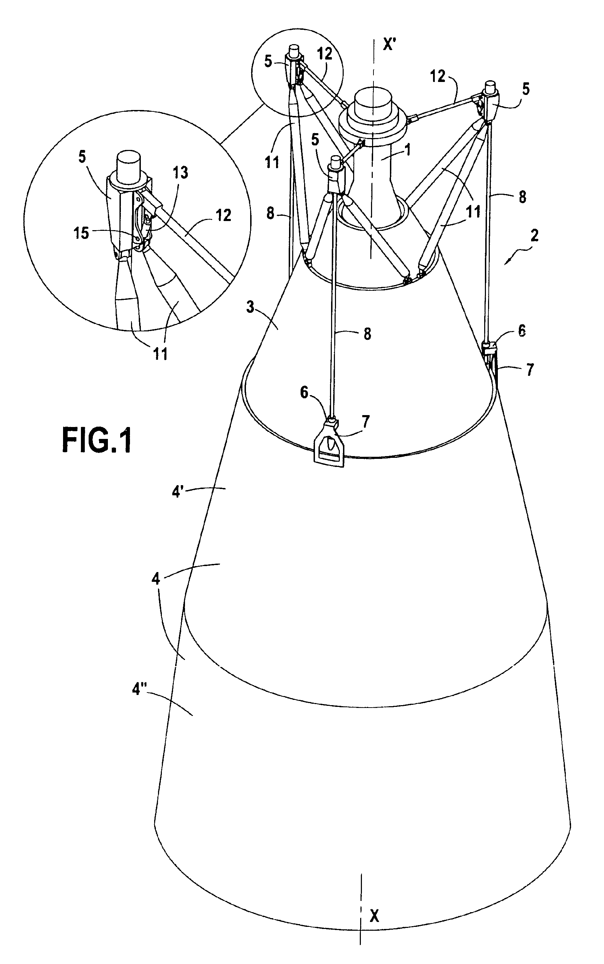

Dans un souci de clarification, sur la figure 1 est simplement visible un support fixe du propulseur 1, ici un fond du propulseur, et le divergent déployable 2 selon l'invention. Le divergent déployable 2 selon l'invention comprend une première partie de divergent fixe 3 raccordée au support fixe du propulseur 1. La liaison entre le support fixe du propulseur 1 et le divergent fixe 3 est une fixation rigide, par exemple assurée par une liaison boulonnée ou par soudage. Par ailleurs, une seconde partie de divergent mobile 4 est positionnée à la suite du divergent fixe 3, en position déployée. Ces première et seconde parties de divergent, fixe 3 ou mobile 4, consistent en des troncs de cônes métalliques ou en matériaux composites permettant d'assurer la conduite et l'orientation des gaz chauds issus de la combustion dans un propulseur, non représenté sur les figures annexées.

Dans l'exemple choisi pour illustrer l'invention, la seconde partie de divergent mobile 4 est composé de deux portions 4', 4", la portion proximale 4' présentant un degré d'ouverture supérieur à la portion extrémale 4". Le diamètre de sortie des parties de divergents 3, 4 est croissant le long de l'axe de symétrie X'X. Dans l'exemple choisi pour illustrer l'invention, le divergent déployable 2 comprend trois ensembles de pièces de liaison 5 destinés à maintenir un mécanisme de déploiement 6, 8 consistant ici en un système de vis-à-billes, chaque pièce de liaison 5 étant associée à une pièce rotative 5'. Ces pièces de liaison 5 servent à fixer et guider respectivement trois mécanismes de déploiement 6, 8 de la seconde partie de divergent mobile 4 et sont elles-mêmes fixées sur le divergent fixe 3 sensiblement à l'extrémité aval de ce divergent fixe 3 par des bras 11, 12, décrits dans la suite. Chaque mécanisme de déploiement 6, 8 est composé d'un élément mobile 6, ou vis-à-billes, relié à une partie 7, consistant en une ferrure mobile, fixée à la seconde partie de divergent mobile 4 et une tige filetée 8 sur laquelle se déplace cet élément mobile 6. Ainsi, le déplacement de l'élément mobile 6 le long de l'axe linéaire de la tige filetée 8 entraîne le déplacement en translation, suivant un axe parallèle à l'axe de symétrie X'X, de la seconde partie de divergent mobile 4. Les pièces de liaison 5 sont disposées circonférentiellement autour du support fixe du propulseur 1 et présentent entre elles des angles sensiblement égaux de 120°. Bien entendu, on pourrait prévoir de disposer plus de pièces de liaison 5 et en conséquence autant de mécanismes de déploiement 6, 8 pour le déplacement de la seconde partie de divergent mobile 4. Il est avantageux de prévoir une disposition symétrique des pièces de liaison 5, et donc des mécanismes de déploiement 6, 8 autour du support fixe du propulseur 1. Ainsi, à titre d'exemple, si le divergent déployable 2 comprend quatre pièces de liaison 5, et donc quatre mécanismes de déploiement, ces pièces de liaison 5 sont disposées sur un même plan avec un angle entre elles sensiblement égal à 90°.

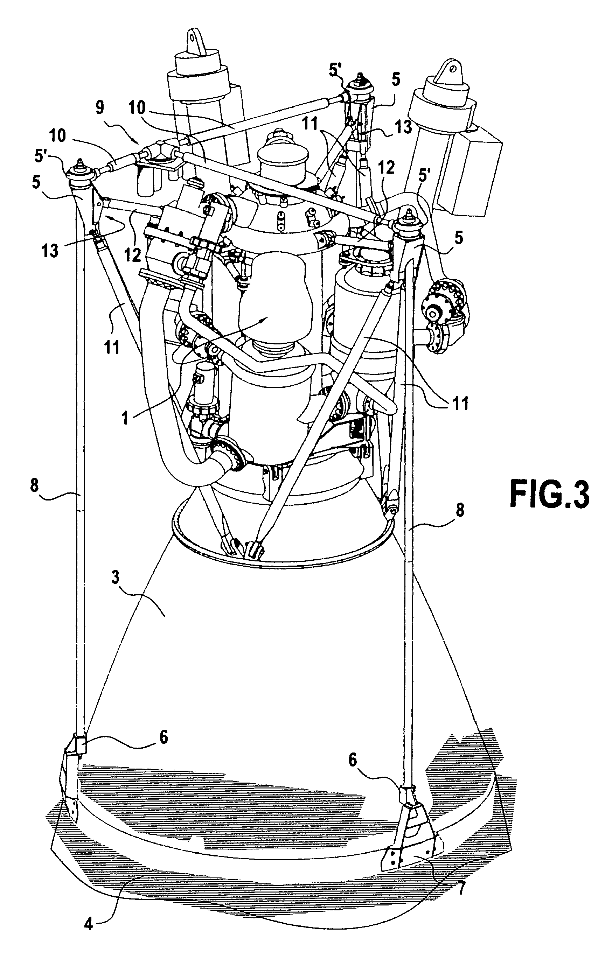

Les mécanismes de déploiement 6, 8 sont actionnés par un moyen de commande 9, de préférence situé à distance du divergent déployable 2 selon l'invention. Ce moyen de commande 9 est ici situé dans la structure fixe du propulseur 1. Le système d'entraînement des mécanismes de déploiement 6, 8 par le moyen de commande 9 peut être assuré par exemple par des arbres de transmission rotatifs 10, comme représenté sur la figure 3, ou par des systèmes de courroies.

Le divergent déployable 2 comprend également des bras de liaison 11, 12. Dans l'exemple choisi pour illustrer l'invention, trois bras de liaison 11, 12 fixes sont reliés d'une part à l'extrémité supérieure de la première partie de divergent fixe 3 ou au support fixe du propulseur 1 et d'autre part à l'une des pièces de liaison 5. Pour chaque pièce de liaison 5, deux bras de liaison 11 s'étendent avec une inclinaison identique, par rapport à l'axe X'X et ces bras 11 sont symétriques par rapport au plan formé par l'axe X'X et une tige filetée 8, depuis l'extrémité amont (raccordée au support fixe du propulseur 1) de la première partie de divergent fixe 3 jusqu'à la pièce de liaison 5 ; ces deux bras de liaison 11 étant idéalement disposés symétriquement de part et d'autre de la pièce de liaison 5 ou d'un plan contenant l'axe X'X et l'axe linéaire de la tige filetée 8. Un troisième bras de liaison 12 est monté sur chaque pièce de liaison 5 avec une inclinaison de l'ordre de 20° à 35° par rapport au plan perpendiculaire à l'axe X'X et passant les trois pièces de liaison 5, et s'étend depuis le support fixe du propulseur 1, plus précisément depuis l'extrémité supérieure du support fixe du propulseur 1 à la pièce de liaison 5.

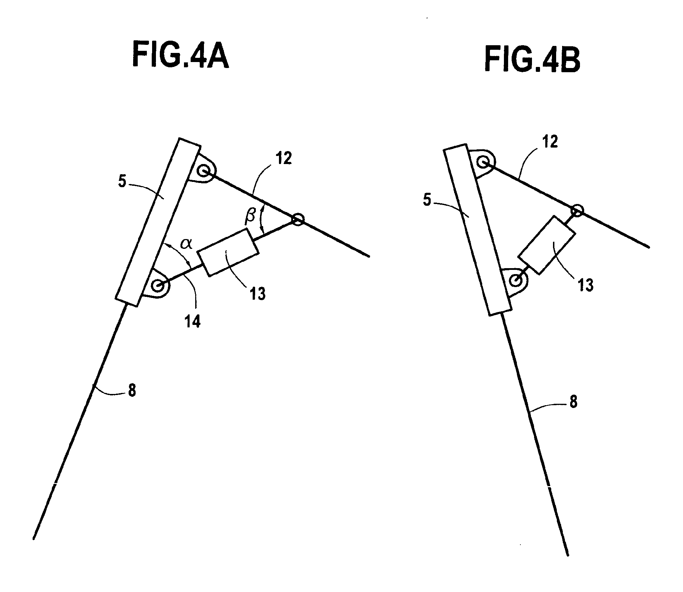

Comme illustré sur la partie agrandie de la figure 1, le moyen d'amortissement 13 est disposé entre l'un au moins des bras de liaison 12 et la pièce de liaison 5. Dans l'exemple choisi pour illustrer l'invention, un moyen d'amortissement 13 est monté sur chacune des pièces de liaison 5. Par ailleurs, de préférence, le moyen d'amortissement 13 est monté entre le bras de liaison 12 s'étendant sensiblement horizontalement et la pièce de liaison 5. Comme illustré sur la figure 4, le placement du moyen d'amortissement 13 entre la pièce de liaison 5 et le bras 12 permet que l'angle α entre l'axe d'extension de la tige filetée 8 et l'axe d'extension 14 du moyen d'amortissement 13 soit un angle aigu. De la même manière, l'angle β entre le moyen d'amortissement 13 et le bras de liaison 12 s'étendant sensiblement horizontalement est également un angle aigu.

Le moyen d'amortissement 13 pourra consister en un ou plusieurs ressorts, un matériau disposant de propriétés élastiques, un amortisseur hydraulique, pneumatique ou hydropneumatique, un amortisseur magnéto-rhéologique ou tous autres types d'amortisseur permettant de remplir la fonction d'amortissement et aptes à être montés sur le divergent selon l'invention.

Les figures 4A et 4B illustrent schématiquement la disposition du moyen d'amortissement 13 entre la pièce de liaison 5 et le bras 12. Ces deux figures 4A, 4B montrent schématiquement les deux positions de déplacement extrême, engendré par les vibrations de la seconde partie de divergent mobile 4, de la tige filetée 8 et de la pièce de liaison 5 ainsi que le bras 12 les uns 5, 8 par rapport à l'autre 12. Le moyen d'amortissement 13 a pour fonction de dissiper la réponse dynamique de la structure aux vibrations générées par le moteur/propulseur, afin de réduire les débattements du mécanisme de déploiement 6, 8 et/ou de la seconde partie de divergent mobile 4. L'angle initial, c'est-à-dire au repos, entre le bras 12 et le mécanisme de déploiement 6, 8 étant par exemple fixé à 60°, le moyen d'amortissement 13 permet de réduire la variation d'angle entre ces deux éléments 6-8, 12 à une valeur minimum, par exemple de l'ordre de ± 5°. Ainsi, les vibrations de la seconde partie de divergent mobile 4 sont substantiellement atténuées et ne sont pas transmises ou quasiment pas transmises au support fixe du propulseur 1 et à ia fusée ou analogue. Par ailleurs, ces vibrations n'affectent plus de façon significative la tenue structurale du moteur/propulseur, en particulier les éléments fixes et mobiles de la tuyère et les éléments fixe et mobile du mécanisme de déploiement.

En l'absence du moyen d'amortissement 13, les vibrations de la seconde partie de divergent mobile 4 sont transmises sans atténuation au fond du propulseur 1, c'est-à-dire à la fusée ou analogue, de sorte que l'angle entre le mécanisme de déploiement 6, 8 et le bras 12 varierait de façon bien plus importante.

L'invention concerne en premier lieu l'utilisation d'un moyen d'amortissement 13 dans un divergent déployable 2 constitué d'une première partie de divergent fixe 3 et d'une seconde partie de divergent mobile 4 afin que les vibrations du divergent mobile 4 ne se transmettent pas, ou soient réduites très substantiellement, au support fixe du propulseur 1 et à la fusée ou analogue.

La seconde partie de divergent mobile 4 est fixé sur le support fixe du propulseur 1 et/ou à la partie de divergent fixe 3 par l'intermédiaire d'une pluralité de moyens support 5, 11, 12 reliés au support fixe du propulseur 1, classiquement le fond du propulseur, et/ou à la première partie de divergent fixe 3 par l'intermédiaire d'une pluralité de bras fixes 11, 12. Les vibrations de la seconde partie de divergent mobile 4, en particulier lors du décollage de la fusée ou analogue, se propagent au fond du propulseur 1, à la première partie de divergent fixe 3 et à l'ensemble de la structure de la fusée ou analogue via ces bras fixes 11, 12. Le moyen d'amortissement 13 est donc idéalement fixé entre l'une au moins des pièces de liaison 5 et l'un au moins des bras fixes 11, 12 de manière à absorber, et donc réduire notablement, ces vibrations.

Certains au moins des bras fixes 12 relient directement la seconde partie de divergent mobile 4 au fond du propulseur 1, via le ou les bras fixe(s) 12. Ainsi, de façon avantageuse, un moyen d'amortissement 13 est placé entre chacune des pièces de liaison 5 et ces bras fixes 12 reliés au support fixe du propulseur 1.

La pièce de liaison 5 pourra comporter, comme illustré sur la portion agrandie de la figure 1, une partie protubérante 15 légèrement décalée ou déportée par rapport à l'axe linéaire du mécanisme de déploiement 6, 8 ou de ia pièce de liaison 5 de manière à faciliter le positionnement du moyen d'amortissement 13.

On pourra prévoir également au moins un moyen d'amortissement 13 entre une pièce de liaison 5 et les autres bras fixes 11 reliés à cette pièce de liaison 5.

Bien entendu, l'invention n'est pas limitée à l'utilisation d'un seul moyen d'amortissement 13 et elle pourra prévoir une pluralité de moyens d'amortissement 13, disposés entre la pièce de liaison 5 et les bras fixes 11, 12 mais également entre les différents bras fixes 11 et 12.

## Revendications

1. Divergent déployable (2) de propulseur, comprenant :
- une première partie de divergent fixe (3) apte à être raccordée à un support fixe du propulseur (1),
- une seconde partie de divergent mobile (4) entre une position rétractée et une position déployée dans laquelle elle se raccorde à l'extrémité aval de la première partie de divergent (3) pour prolonger celle-ci (3), et
- au moins un mécanisme de déploiement (6, 8) comportant un moyen de déplacement (6) de la seconde partie de divergent mobile (4) par rapport à la première partie de divergent fixe (3) pour le déploiement de la seconde partie de divergent mobile (4) depuis sa position rétractée à sa position déployée,
**caractérisé en ce qu'**il comprend au moins un moyen d'amortissement (13) destiné à amortir les vibrations en provenance de la seconde partie de divergent mobile (4) et/ou du mécanisme de déploiement (6, 8) et
**en ce que** le moyen d'amortissement (13) est positionné entre le mécanisme de déploiement (6, 8) et le support fixe du propulseur (1) et/ou la première partie de divergent fixe (3).

2. Divergent (2) selon la revendication 1, **caractérisé en ce que** le mécanisme de déploiement (6, 8) comprend au moins un ensemble de fixation (5, 11, 12) pour assurer la fixation du mécanisme de déploiement (6, 8) de la seconde partie de divergent mobile (4).

3. Divergent (2) selon la revendication 2, dans lequel le moyen d'amortissement (13) est disposé entre le mécanisme de déploiement et le support fixe du propulseur, **caractérisé en ce que** l'ensemble de fixation (5, 11, 12) comprend le moyen amortisseur (13).

4. Divergent (2) selon la revendication 2 ou 3, **caractérisé en ce que** l'ensemble de fixation (5, 11, 12) comprend une pluralité de bras (11, 12) et une pièce de liaison (5), lesdits bras (11, 12) étant apte à être fixés d'une part à une pièce fixe par rapport au divergent fixe (3) et étant fixés d'autre part à la pièce de liaison (5).

5. Divergent (2) selon la revendication 4, **caractérisé en ce qu'**au moins un desdits bras (12) est apte à être fixé au support fixe du propulseur (1).

6. Divergent (2) selon la revendication 5, dans lequel le moyen d'amortissement (13) est disposé entre le mécanisme de déploiement et le support fixe du propulseur, **caractérisé en ce que** le moyen d'amortissement (13) est disposé entre la pièce de liaison (5) et le susdit bras (12).

7. Divergent (2) selon l'une quelconque des revendications précédentes, **caractérisé en ce que** le mécanisme de déploiement (6, 8) est un moyen apte à assurer le déplacement en translation de la seconde partie de divergent (4), tel qu'une vis-à-billes.

8. Divergent (2) selon l'une quelconque des revendications précédentes, **caractérisé en ce qu'**il comprend trois ensembles de fixation (5, 11, 12) répartis de manière homogène selon la circonférence du divergent fixe (3).

9. Divergent (2) selon la revendication 5 et l'une quelconque des revendications 1 à 8, **caractérisé en ce que** l'angle entre le susdit bras (12) et la pièce de liaison (5) est un angle aigu.

10. Divergent (2) selon la revendication 5 et l'une quelconque des revendications 1 à 9, **caractérisé en ce que** l'angle entre le moyen d'amortissement (13) et le mécanisme de déploiement (6, 8) ainsi que l'angle entre le moyen d'amortissement (13) et le susdit bras (12) sont des angles aigus.

11. Divergent (2) selon l'une quelconque des revendications précédentes, **caractérisé en ce que** le mécanisme de déploiement (6, 8) est commandé par une unité de commande (9) située à distance dudit divergent (2).

## Patentansprüche

1. Ausfahrbarer divergenter Düsenteil (2) eines Triebwerks, umfassend:
- ein erstes festes Teil (3) des divergenten Düsenteils, welches geeignet ist, mit einem festen Träger des Triebwerks (1) verbunden zu werden,
- ein zweites Teil (4) des divergenten Düsenteils, welches zwischen einer eingefahrenen Position und einer ausgefahrenen Position, in der es an das stromabwärtige Ende des ersten Teils (3) des divergenten Düsenteils anschließt, um dieses (3) zu verlängern, beweglich ist, und
- wenigstens einen Ausfahrmechanismus (6, 8), der ein Mittel zum Bewegen (6) des zweiten beweglichen Teils (4) des divergenten Düsenteils gegenüber dem ersten festen Teil (3) des divergenten Düsenteils, für das Ausfahren des zweiten beweglichen Teils (4) des divergenten Düsenteils von seiner eingefahrenen Position in seine ausgefahrene Position umfaßt,
**dadurch gekennzeichnet, daß** er wenigstens ein Dämpfungsmittel (13) umfaßt, das dazu bestimmt ist, die von dem zweiten beweglichen Teil (4) des divergenten Düsenteils und/oder von dem Ausfahrmechanismus (6, 8) ausgehenden Schwingungen zu dämpfen, und
daß das Dämpfungsmittel (13) zwischen dem Ausfahrmechanismus (6, 8) und dem festen Träger des Triebwerks (1) und/oder dem ersten festen Teil (3) des divergenten Düsenteils angeordnet ist.

2. Divergenter Düsenteil (2) nach Anspruch 1, **dadurch gekennzeichnet, daß** der Ausfahrmechanismus (6, 8) wenigstens eine Befestigungsanordnung (5, 11, 12) umfaßt, um die Befestigung des Ausfahrmechanismus (6, 8) des zweiten beweglichen Teils (4) des divergenten Düsenteils sicherzustellen.

3. Divergenter Düsenteil (2) nach Anspruch 2, wobei das Dämpfungsmittel (13) zwischen dem Ausfahrmechanismus und dem festen Träger des Triebwerks angeordnet ist, **dadurch gekennzeichnet, daß** die Befestigungsanordnung (5, 11, 12) das Dämpfungsmittel (13) umfaßt.

4. Divergenter Düsenteil (2) nach Anspruch 2 oder 3, **dadurch gekennzeichnet, daß** die Befestigungsanordnung (5, 11, 12) eine Vielzahl von Armen (11, 12) sowie ein Verbindungsteil (5) umfaßt, wobei die Arme (11, 12) geeignet sind, einerseits an einem gegenüber dem festen divergenten Düsenteil (3) feststehenden Teil befestigt zu werden, und andererseits an dem Verbindungsteil (5) befestigt sind.

5. Divergenter Düsenteil (2) nach Anspruch 4, **dadurch gekennzeichnet, daß** wenigstens einer der Arme (12) geeignet ist, an dem festen Träger des Triebwerks (1) befestigt zu werden.

6. Divergenter Düsenteil (2) nach Anspruch 5, wobei das Dämpfungsmittel (13) zwischen dem Ausfahrmechanismus und dem festen Träger des Triebwerks angeordnet ist, **dadurch gekennzeichnet, daß** das Dämpfungsmittel (13) zwischen dem Verbindungsteil (5) und dem oben genannten Arm (12) angeordnet ist.

7. Divergenter Düsenteil (2) nach einem der vorhergehenden Ansprüche, **dadurch gekennzeichnet, daß** der Ausfahrmechanismus (6, 8) ein Mittel ist, welches geeignet ist, die Verschiebebewegung des zweiten Teils (4) des divergenten Düsenteils sicherzustellen, wie eine Kugelrollspindel.

8. Divergenter Düsenteil (2) nach einem der vorhergehenden Ansprüche, **dadurch gekennzeichnet, daß** er drei Befestigungsanordnungen (5, 11, 12) umfaßt, die entlang dem Umfang des festen divergenten Düsenteils (3) gleichmäßig verteilt sind.

9. Divergenter Düsenteil (2) nach Anspruch 5 und einem der Ansprüche 1 bis 8, **dadurch gekennzeichnet, daß** der Winkel zwischen dem oben genannten Arm (12) und dem Verbindungsteil (5) ein spitzer Winkel ist.

10. Divergenter Düsenteil (2) nach Anspruch 5 und einem der Ansprüche 1 bis 9, **dadurch gekennzeichnet, daß** der Winkel zwischen dem Dämpfungsmittel (13) und dem Ausfahrmechanismus (6, 8) sowie der Winkel zwischen dem Dämpfungsmittel (13) und dem oben genannten Arm (12) spitze Winkel sind.

11. Divergenter Düsenteil (2) nach einem der vorhergehenden Ansprüche, **dadurch gekennzeichnet, daß** der Ausfahrmechanismus (6, 8) durch eine im Abstand von dem divergenten Düsenteil (2) befindliche Betätigungseinheit (9) betätigt wird.

## Claims

1. A deployable diverging bell (2) for a thruster, the bell comprising:
· a stationary first diverging bell portion (3) suitable for being connected to a stationary support of the thruster (1);
· a movable second diverging bell portion (4) that is movable between a retracted position and a deployed position in which it is connected to the downstream end of the first diverging bell portion (3) in order to extend it (3); and
· at least one deployment mechanism (6, 8) including means (6) for moving the movable second diverging bell portion (4) relative to the stationary first diverging bell portion (3) in order to deploy the movable second diverging bell portion (4) from its retracted position to its deployed position;
the bell being **characterized in that** it includes at least one damper means (13) for damping vibration coming from the movable second diverging bell portion (4) and/or the deployment mechanism (6, 8), and **in that** the damper means (13) are positioned between the deployment mechanism (6, 8) and the stationary support of the thruster (1) and/or the stationary first diverging bell portion (3).

2. A diverging bell (2) according to claim 1, **characterized in that** the deployment mechanism (6, 8) includes · at least one fastener assembly (5, 11, 12) for fastening the deployment mechanism (6, 8) of the movable second diverging bell portion (4).

3. A diverging bell (2) according to claim 2, in which the damper means (13) is arranged between the deployment mechanism and the stationary support of the thruster **characterized in that** the fastener assembly (5, 11, 12) includes the damper means (13).

4. A diverging bell (2) according to claim 2 or claim 3, **characterized in that** the fastener assembly (5, 11, 12) comprises a plurality of arms (11, 12) and a connection part (5), said arms (11, 12) being suitable for being fastened firstly to a part that is stationary relative to the stationary diverging bell (3) and being fastened secondly to the connection part (5).

5. A diverging bell (2) according to claim 4, **characterized in that** at least one of said arms (12) is suitable for being fastened to the stationary support of the thruster (1).

6. A diverging bell (2) according to claim 5, **characterized in that** the damper means (13) is arranged between the connection part (5) and said arm (12).

7. A diverging bell (2) according to any preceding claim, **characterized in that** the deployment mechanism (6, 8) is means suitable for moving the second diverging bell portion (4) in translation, such as a ball screw.

8. A diverging bell (2) according to any preceding claim, **characterized in that** it includes three fastener assemblies (5, 11, 12) distributed uniformly around the circumference of the stationary diverging bell (3).

9. A diverging bell (2) according to claim 5 and any one of claims 1 to 8, **characterized in that** the angle between said arm (12) and the connection part (5) is an acute angle.

10. A diverging bell (2) according to claim 5 and any one of claims 1 to 9, **characterized in that** the angle between the damper means (13) and the deployment mechanism (6, 8) and the angle between the damper means (13) and said arm (12) are acute angles.

11. A diverging bell (2) according to any preceding claim, **characterized in that** the deployment mechanism (6, 8) is controlled by a control unit (9) situated at a distance from said diverging bell (2).
